(19) Europäisches Patentamt / European Patent Office / Office européen des brevets

(11) **EP 1 785 453 B1**

(12) **EUROPEAN PATENT SPECIFICATION**

(45) Date of publication and mention of the grant of the patent:
**18.04.2012 Bulletin 2012/16**

(51) Int Cl.:
*C08L 33/12* (2006.01)          *C08L 51/00* (2006.01)
*C08L 67/04* (2006.01)

(21) Application number: **05750878.0**

(22) Date of filing: **15.06.2005**

(86) International application number:
**PCT/JP2005/010947**

(87) International publication number:
**WO 2005/123831 (29.12.2005 Gazette 2005/52)**

(54) **POLYLACTIC ACID-CONTAINING RESIN COMPOSITION AND MOLDED BODY OBTAINED FROM SAME**

POLYMILCHSÄURE ENTHALTENDE HARZZUSAMMENSETZUNG UND DARAUS ERHALTENER FORMKÖRPER

COMPOSITION DE RÉSINE CONTENANT L"ACIDE POLYLACTIQUE ET CORPS MOULÉ OBTENU À PARTIR DE CETTE COMPOSITION

(84) Designated Contracting States:
**DE FI FR GB IT**

(30) Priority: **16.06.2004 JP 2004178446**

(43) Date of publication of application:
**16.05.2007 Bulletin 2007/20**

(73) Proprietor: **UNITIKA LTD.**
**Amagasaki-shi**
**Hyogo 660-0824 (JP)**

(72) Inventors:
• **FUJII, Shigeta**
**Kyoto 611-0021 (JP)**
• **MATSUMOTO, Tatsuya**
**Kyoto 611-0021 (JP)**

• **UEDA, Kazue**
**Kyoto 611-0021 (JP)**
• **YANO, Takuma**
**Kyoto 611-0021 (JP)**

(74) Representative: **Pautex Schneider, Nicole Véronique et al**
**Novagraaf International SA**
**Chemin de l'Echo 3**
**1213 Onex (CH)**

(56) References cited:
| | |
|---|---|
| JP-A- 8 059 949 | JP-A- 2002 030 208 |
| JP-A- 2002 037 987 | JP-A- 2003 128 901 |
| JP-A- 2003 183 488 | JP-A- 2003 261 756 |
| JP-A- 2003 286 396 | JP-A- 2003 286 400 |
| JP-A- 2003 321 602 | JP-A- 2004 010 842 |
| JP-A- 2005 171 204 | |

**Description**

**TECHNICAL FIELD**

The present invention relates to a polylactic acid-containing resin composition, and a product molded therefrom.

**BACKGROUND ART**

With recent growing awareness of environmental issues, a variety of biodegradable aliphatic polyesters have come into focus. Particularly, polylactic acid is prepared from a material derived from plants such as corn and sweet potato through an established mass production method. In addition, polylactic acid is highly transparent, and advantageously has a higher melting point (Tm) than the other aliphatic polyesters. However, polylactic acid has a lower glass transition temperature (Tg) and, therefore, tends to have an insufficient heat resistance in a temperature range not lower than Tg. Further, polylactic acid is hard and brittle and, hence, has a lower impact strength. Therefore, products molded from polylactic acid have limitations in applications.

In order to improve the heat resistance, various studies are conducted by mixing polylactic acid with an ordinary non-biodegradable resin having a higher Tg than polylactic acid. Resin compositions containing the resulting mixture are non-biodegradable. However, if the resin compositions are widely used, the total use amount of plant-derived polylactic acid is increased, thereby contributing to saving of oil resources. Therefore, the mixture is widely considered to be environmentally advantageous. However, polylactic acid is not perfectly compatible with the non-biodegradable resin, so that the resulting resin composition is poorer in transparency. On the other hand, a flexible biodegradable resin relatively compatible with polylactic acid is often blended with polylactic acid for improving the impact resistance. However, the flexible biodegradable resin generally has a lower glass transition temperature (Tg), making it impossible to ensure a sufficient heat resistance. Since the flexible biodegradable resin is not perfectly compatible with polylactic acid, the resulting resin composition has a lower transparency.

In view of the foregoing, it is conceivable to blend a transparent resin such as an acryl resin having a higher Tg than polylactic acid and compatible with polylactic acid for improving the heat resistance of polylactic acid while ensuring a satisfactory transparency. Based on this idea, techniques are developed for blending polymethyl methacrylate (hereinafter referred to simply as "PMMA") or a copolymer of an acryl resin with polylactic acid. These techniques are disclosed in the following documents.

(1) Polymer, 39(26),6891 (1998)
(2) Macromol. Chem. Phys, 201, 1295 (2000)
(3) J. Polym. Sci. Part B, 41(1), 23 (2003)
(4) JP-A-2003-064246
(5) JP-A-2003-238788
(6) JP-A-2003-286396

However, resin blends disclosed in Documents (1) to (3) each have a plurality of glass transition temperatures Tg. This means that the resin blends are in an insufficiently compatibilized state. Therefore, the heat resistances of the resin blends are dependent upon the Tg of polylactic acid resin which is lower than the Tg of the other resin and, hence, are at substantially the same level as the heat resistance of polylactic acid. In addition, the blends are not necessarily excellent in transparency, and are poor in impact resistance, because the compatibilization is insufficient. Copolymers disclosed in Documents (4) and (5) are not produced on an industrial basis and, therefore, are costlier than the PMMA. In addition, it is impossible to ensure sufficient transparency and impact resistance, depending on the formulation of the copolymer.

In relation to the present invention, an application previously filed by the inventors of the present invention discloses a resin composition which is prepared by mixing polylactic acid with a PMMA having a specific molecular weight and is excellent in heat resistance, transparency and moldability (JP Application No. 2003-417167). A method described in this JP Application improves the heat resistance while maintaining the transparency of polylactic acid. However, the impact strength still needs to be improved.

In the document (6), a method is proposed in which an impact resistance improving material is added for improving the impact strength of polylactic acid. However, the heat resistance is not improved by the addition of the impact resistance improving material. If a crystal nucleating agent is added to cope with this drawback, the heat resistance is improved, but crystallization of polylactic acid results in turbidity, leading to poorer transparency. In addition, polylactic acid is susceptible to hydrolysis. This also needs improvement. That is, a resin composition which contains the impact resistance improving material and a combination of polylactic acid and PMMA and is excellent in transparency, heat resistance, impact resistance and durability is not known yet.

## DISCLOSURE OF THE INVENTION

### PROBLEMS TO BE SOLVED BY THE INVENTION

To solve the aforementioned problems, it is an object of the present invention to provide a polylactic acid-containing resin composition which is excellent in heat resistance, transparency and moldability and is improved in impact resistance and durability, and a product molded therefrom. Particularly, the object of the present invention is to provide a polylactic acid-containing resin composition which comprises polylactic acid, PMMA and an impact resistance improving material and is excellent in heat resistance, moldability and durability and has a higher transparency and impact resistance, and a product molded therefrom.

### MEANS FOR SOLVING THE PROBLEMS

The inventors of the present invention conducted intensive studies to solve the aforementioned problems.

As a result, the inventors found that a resin composition prepared by blending a specific impact resistance improving material with a resin composition containing polylactic acid and PMMA is excellent in heat resistance and transparency and has a higher impact resistance, thereby attaining the present invention.

The present invention has the following aspects.

(1) A polylactic acid-containing resin composition comprises 100 parts by mass of a resin containing 20 to 98 mass% of polymethyl methacrylate and 80 to 2 mass% of polylactic acid, and 1 to 100 parts by mass of an impact resistance improving material.

(2) In the polylactic acid-containing resin composition according to the aspect (1), the impact resistance improving material is a polymeric material comprising an acrylic monomer unit.

(3) In the polylactic acid-containing resin composition according to the aspect (1) or (2), the impact resistance improving material is a multilayer polymeric material of a core-shell type.

(4) In the polylactic acid-containing resin composition according to the aspect (3), the polymeric material includes a shell layer comprising a polymer having a methyl methacrylate unit, and a core layer comprising a polymer having an alkyl acrylate unit.

(5) In the polylactic acid-containing resin composition according to any of the aspects (1) to (4), the impact resistance improving material has a refractive index of 1.402 to 1.542.

(6) In the polylactic acid-containing resin composition according to any of the aspects (1) to (5), the refractive index of the impact resistance improving material satisfies the following expression (i):

$$RIb-0.005<RIa<RIb+0.005 \quad ...(i)$$

wherein RIa is the refractive index of the impact resistance improving material and RIb is the refractive index of the resin containing the polymethyl methacrylate and the polylactic acid.

(7) The polylactic acid-containing resin composition according to any of the aspects (1) to (6), further comprises 0.05 to 30 parts by mass of a swellable phyllosilicate based on 100 parts by mass of the resin composition.

(8) In the polylactic acid-containing resin composition according to any of the aspects (1) to (7), the polylactic acid has a blocked terminal.

(9) A product molded from the polylactic acid-containing resin composition according to any of the aspects (1) to (8).

### EFFECTS OF THE INVENTION

According to the present invention, the polylactic acid-containing resin composition which is satisfactory in transparency, heat resistance, moldability, durability and impact resistance can be prepared on an industrial basis by a simplified method. According to the present invention, a variety of molded products can be produced from the resin composition by various molding methods such as extrusion molding, injection molding and blow molding.

### BEST MODE FOR CARRYING OUT THE INVENTION

The present invention will hereinafter be described in detail.

The polylactic acid to be used in the present invention is a polymer containing L-lactic acid and/or D-lactic acid as a major component, but may be copolymerized with a second resin component as required, as long as the effects of the present invention are not marred.

Exemplary copolymerizable units include, for example, polycarboxylic acids, polyols, hydroxycarboxylic acids and lactones. More specific examples include: polyvalent carboxylic acids such as oxalic acid, malonic acid, succinic acid, glutaric acid, adipic acid, azelaic acid, sebacic acid, dodecanedioic acid, fumaric acid, cyclohexanedicarboxylic acid, terephthalic acid, isophthalic acid, phthalic acid, naphthalene-2,6-dicarboxylic acid, sodium 5-sulfoisophthalate and tetrabutylphosphonium 5-sulfoisophthalate; polyols such as ethylene glycol, propylene glycol, butanediol, heptanediol, hexanediol, octanediol, nonanediol, decanediol, 1,4-cyclohexanedimethanol, neopentyl glycol, glycerol, trimethylolpropane, pentaerythritol, bisphenol A, aromatic polyols obtained by adding ethylene oxide to bisphenol, diethylene glycol, triethylene glycol, polyethylene glycol, polypropylene glycol and polytetramethylene glycol; hydroxycarboxylic acids such as glycolic acid, 3-hydroxybutyric acid, 4-hydroxybutyric acid, 4-hydroxyvaleric acid, 6-hydroxycaproic acid and hydroxybenzoic acid; and lactones such as glycollide, ε-caprolactone glycollide, ε-caprolactone, β-propiolactone, δ-butyrolactone, β- or γ-butyrolactone, pivarolactone and δ-valerolactone.

The optical purity of the lactic acid component in the polylactic acid is not particularly limited. A lactic acid component obtained from a naturally occurring material is L-lactic acid, so that L-lactic acid is preferably contained in a proportion of not less than 80 mol% based on the entire lactic acid component in consideration of production costs.

A known polymerization method may be used for preparation of the polylactic acid. Specific examples of the polymerization method include direct polymerization from lactic acid and ring-opening polymerization via lactide, which may be used in combination with solid-phase polymerization.

The molecular weight and molecular weight distribution of the polylactic acid are not particularly limited, as long as the resulting resin is moldable. The weight average molecular weight is not less than 100, 000. The upper limit of the weight average molecular weight which ensures proper molding is about 500,000.

The PMMA to be used in the present invention is not particularly limited, but preferably contains a methyl methacrylate unit in a proportion of not less than 80 mass%. The PMMA may contain a vinyl-based monomer unit other than methyl methacrylate in a proportion of not greater than 20 mass%. Examples of the vinyl-based monomer unit include alkyl (meth)acrylates other than methyl methacrylate and styrene.

The weight average molecular weight of the PMMA is 50,000 to 250,000. If the weight average molecular weight is greater than 300,000, the PMMA is less compatible with the polylactic acid. If the weight average molecular weight is less than 20,000, the PMMA is unlikely to exhibit its intrinsic properties such as heat resistance and transparency. By using the PMMA having a molecular weight in the aforesaid range, the PMMA is perfectly compatibilized with the polylactic acid by an industrially useful melt-kneading method, so that a resin composition excellent in heat resistance, transparency and processability can be provided.

The impact resistance improving material to be used in the present invention is not particularly limited, but exemplary materials therefor include (co)polymers such as polyethylene, polypropylene, copolymers of ethylene and propylene, copolymers of ethylene, propylene and unconjugated diene, copolymers of ethylene and vinyl acetate, polyether rubbers, acryl rubbers, copolymers of ethylene and acrylic acid, alkali metal salts of any of these polymers, copolymers of ethylene and glycidyl (meth) acrylate, copolymers of ethylene and alkyl acrylates, diene rubbers, copolymers of dienes and vinyl, silicone rubbers, polyurethane rubbers, polyether rubbers, epichlorohydrin rubbers, polyester elastomers and polyamide elastomers. These may each be a random copolymer, a block copolymer or a graft copolymer.

In the present invention, these (co)polymers for the impact resistance improving material may be crosslinked with a crosslinking component such as a divinylbenzene unit, an allyl acrylate unit or a butylene glycol acrylate unit, or contain a vinyl group. The (co)polymers may each have a cis-form, a trans-form or other form.

Among the aforesaid (co)polymers for the impact resistance improving material, polymers containing an acrylic monomer unit are preferred, and polymers containing an alkyl (meth) acrylate unit are particularly preferred. Preferred examples of the units include a methyl acrylate unit, an ethyl acrylate unit, a butyl acrylate unit, a methyl methacrylate unit, an ethyl methacrylate unit and a butyl methacrylate unit. These polymers each serve as an elastomer to improve the impact resistance, and are excellent in compatibility with the polylactic acid and the PMMA. In addition, the polymers improve the heat resistance and transparency of the resulting resin composition.

The impact resistance improving material is preferably a multilayer polymeric material of a so-called core-shell type including a core layer and at least one shell layer covering the core layer, in which adjoining layers are respectively composed of different polymers. The core layer of the multilayer polymeric material preferably comprises an elastomer component such as an SBR, butadiene, an acrylonitrile-styrene copolymer or a polymer having a (meth) acrylate unit (e.g., an acryl rubber), and the shell layer preferably comprises polystyrene or a polymer having a (meth)acrylate unit.

Where the impact resistance improving material is the core-shell type multilayer material, the shell layer serves to maintain the shape of the core layer of the elastomer component, making it possible to evenly disperse the elastomer component in the resin. Therefore, the resulting resin composition has an excellent impact resistance. In addition, impact can be absorbed by an interface between the core layer and the shell layer and an interface between the shell layer and the matrix. Therefore, further improvement in the impact resistance can be expected.

A particularly preferred combination of the core layer and the shell layer is such that the shell layer is composed of a polymer having a methyl methacrylate unit for the compatibility with the resin containing the polylactic acid and the PMMA and the dispersibility in the resin, and the core layer is composed of a polymer having an alkyl acrylate unit for the improvement of the impact resistance and the adjustment of the refractive index. Preferred examples of the polymer having the alkyl acrylate unit for the core layer include acryl rubbers. The acryl rubbers generally designate synthetic rubbers consisting essentially of an alkyl acrylate, and typical examples thereof include copolymers of an alkyl acrylate and 2-chloroethyl vinyl ether (ACM) and copolymers of an alkyl acrylate and acrylonitrile (ANM).

The core/shell mass ratio is not particularly limited, but preferably in a range between 10/90 and 90/10.

The size of the impact resistance improving material is not particularly limited, but the impact resistance improving material preferably has an average particle diameter of 0.01 to 1µm, more preferably 0.02 to 0.5µm. If the average particle diameter is smaller than 0.01µm, it is difficult to ensure the impact resistance. If the average particle diameter is greater than 1µm, the fluidity and the moldability will be impaired.

For further improvement of the transparency of the inventive resin composition, the impact resistance improving material preferably has a refractive index of 1.402 to 1.542. The range of the refractive index includes the refractive index of the polylactic acid (1.454) and the refractive index of the PMMA (1.490) and is defined between upper and lower limits of 1.472±0.070, wherein 1.472 is the average of the refractive indexes of the polylactic acid and the PMMA. The refractive index range is more preferably 1.430 to 1.510, further preferably 1.450 to 1.490. If the refractive index of the impact resistance improving material is less than 1.402 or greater than 1.542, a difference in refractive index between the resin and the impact resistance improving material is increased, so that the transparency of the resin composition is likely to be reduced due to light scattering.

For further improvement of the transparency of the inventive resin composition, the refractive index of the impact resistance improving material preferably satisfies the following expression (i):

$$RIb-0.005<RIa<RIb+0.005 \quad ...(i)$$

wherein RIa is the refractive index of the impact resistance improving material and RIb is the refractive index of the resin containing the PMMA and the polylactic acid.

By setting the refractive index of the impact resistance improving material closer to the refractive index of the PMMA/polylactic acid resin composition, the reduction of the transparency due to the light scattering can be suppressed.

The PMMA/polylactic acid ratio in the inventive resin composition should be 20 to 98 mass%/80 to 2 mass%, preferably 25 to 95 mass%/75 to 5 mass%, more preferably 30 to 95 mass%/70 to 5 mass%. If the ratio of the polylactic acid is greater than 80 mass%, Tg of the resin composition is not so highly increased from Tg of the polylactic acid. If the ratio of the PMMA is greater than 98 mass%, the resulting composition is no longer regarded as an environmentally friendly polylactic acid composition.

The amount of the impact resistance improving material to be blended should be 1 to 100 parts by mass, preferably 3 to 50 parts by mass, based on a total of 100 parts by mass of the PMMA and the polylactic acid. If the amount of the impact resistance improving material is less than 1 part by mass, the improvement of the impact strength is diminished. An amount of greater than 100 parts by mass is not preferred in terms of costs, fluidity and moldability.

A production method for the inventive resin composition is not particularly limited, but a melt-kneading method may be used which is the simplest method on an industrial basis. In the melt-kneading method, the resin composition is prepared by melt-kneading the polylactic acid, the PMMA and the impact resistance improving material. An ordinary extruder may be used for the melt-kneading, and a twin screw extruder is preferably used for improving the kneading capability. When the polylactic acid, the PMMA and the impact resistance improving material are fed into the extruder, these ingredients may be preliminarily dry-blended and supplied into a single hopper, or may be respectively supplied into three hoppers and metered by screws disposed below the hoppers.

A method for kneading the ingredients is not particularly limited, but the polylactic acid, the PMMA and the impact resistance improving material may be simultaneously kneaded. Alternatively, the polylactic acid and the PMMA may be first kneaded and then together with the impact resistance improving material. The properties (e.g., transparency) of the inventive resin composition are not influenced by the kneading order.

An additional resin component may be mixed with the inventive resin composition, as long as the effects of the present invention are not marred. Exemplary biodegradable resins to be used as the additional resin component include polyglycolic acid, poly(3-hydroxybutyric acid), poly(3-hydroxyvaleric acid), poly(3-hydroxycaproic acid), polyethylene succinate, polybutylene succinate, a poly(butylene adipate/butylene terephthalate) copolymer and a poly(ethylene adipate/ethylene terephthalate) copolymer, and copolymers and mixtures of any of these polymers. Exemplary synthetic non-biodegradable resins to be used as the additional resin component include: thermoplastic resins and their graft copolymers such as polyethylene glycol and derivatives thereof, polyvinyl alcohol, polyvinyl acetate, nylon and other polyamides, polyethylenes including LDPE, LLDPE and HDPE, polyethylene copolymers containing any other polyolefins, polyvinyl chloride (whether plastic or non-plastic), fluorine-containing hydrocarbon resins such as polytetrafluoroethylene, polystyrene, polypropylene, cellulose resins such as cellulose acetate butyrate, other acryl resins, acrylonitrile-butadiene-styrene, acrylonitrile-styrene, polycarbonate, polyvinyl acetate, ethylene vinyl acetate, polyvinyl alcohol, polyoxymethylene, polyformaldehyde and polyacetal; polyesters such as polyethylene terephthalate and polyether ether ketones; phenyl-formaldehyde resins such as resol and novolak; and copolymers and mixtures of any of these polymers. Exemplary synthetic non-biodegradable thermosetting resins to be used as the additional resin component include polyurethane, silicone, fluorosilicone, phenol resins, melamine resins, melamine-formaldehyde and urea-formaldehyde, and copolymers and mixtures of any of these polymers.

A pigment, a heat stabilizer, an antioxidant, a weather resistant agent, a flame retarder, a plasticizer, a lubricant, a mold release agent, an antistatic agent, a filler, a lubricating material or the like may be added to the inventive resin composition, as long as the effects of the present invention are not marred. Examples of the heat stabilizer and the antioxidant include hindered phenols, phosphorus compounds, hindered amines, sulfur compounds, copper compounds and halides of alkali metals, and mixtures of any of these compounds. The additives such as the heat stabilizer, the antioxidant and the weather resistant agent are generally added during the melt-kneading or the polymerization. Exemplary inorganic fillers include talc, calcium carbonate, zinc carbonate, warrastonite, silica, alumina, magnesium oxide, calcium silicate, sodium aluminate, calcium aluminate, sodium aluminosilicate, magnesium silicate, glass balloon, carbon black, zinc oxide, antimony trioxide, zeolites, hydrotalcite, metal fibers, metal whiskers, ceramic whiskers, potassium titanate, boron nitride, graphite, glass fibers and carbon fibers. Exemplary organic fillers include naturally existing polymers such as starch, cellulose particles, wood powder, bean curd refuse, chaff, wheat bran and kenaf, and products obtained by modifying any of these polymers.

For improving the heat resistance and moldability of the inventive resin composition, a swellable phyllosilicate is preferably added. The addition of the swellable phyllosilicate imparts the inventive resin composition with thermal deformation resistance and /or gas barrier property. The amount of the phyllosilicate to be added is not particularly limited, but may be 0.05 to 30 parts by mass based on 100 parts by mass of the resin composition. For the addition, the swellable phyllosilicate may be added to either or both of the polylactic acid and the PMMA before the mixing of the polylactic acid and the PMMA, or may be added to a mixture of the polylactic acid and the PMMA during the mixing. The swellable phyllosilicate has an interlayer distance of not less than 2nm (20Å) and a particle diameter of about 1 to about 1000nm when being dispersed in the resin.

Examples of the swellable phyllosilicate include smectites, vermiculites and swellable fluorinated mica. Examples of the smectites include montmorillonite, beidellite, hectorite and saponite. Examples of the swellable fluorinated mica include Na-type silicon tetrafluoride mica, Na-type taeniolite and Li-type taeniolite. For improvement of the dispersibility of the swellable phyllosilicate in the resin, the swellable phyllosilicate is preliminarily treated with an organic cation as required. Examples of the organic cation include products obtained by protonization of primary, secondary and tertiary amines, quaternary ammoniums and organic phosphoniums. Examples of the primary amines include octylamine, dodecylamine and octadecylamine. Examples of the secondary amines include dioctylamine, methyloctadecylamine and dioctadecylamine. Examples of the tertiary amines include trioctylamine, dimethyldodecylamine, didodecylmonomethylamine, dimethyloctylamine, dimethyldecylamine, dimethyllaurylamine, dimethylmyristylamine, dimethylpalmitylamine, dimethylstearylamine, dilaurylmonomethylamine, tributylamine, trioctylamine and N,N-dimethylaniline. Examples of the quaternary ammoniums include tetraethylammonium, octadecyltrimethylammonium, dimethyldioctadecylammonium, dihydroxyethylmethyldodecylammonium, dihydroxyethylmethyloctadecylammonium, methyldodecylbis(polyethylene glycol)ammonium and methyldiethyl(polypropylene glycol)ammonium. Examples of the organic phosphoniums include tetraethylphosphonium, tetrabutylphosphonium, tetrakis(hydroxymethyl)phosphonium and 2-hydroxyethyltriphenylphosphonium. These cations may be used either alone or in combination.

For improvement of the durability, the polylactic acid in the inventive resin composition is preferably terminal-blocked by a hydrolysis preventing agent. Examples of the hydrolysis preventing agent include carbodiimide, oxazoline and epoxy compounds. The amount of the hydrolysis preventing agent to be added is not particularly limited, but preferably 0.1 to 5 parts by mass based on 100 parts by mass of the resin composition. For the addition of the hydrolysis preventing agent, the hydrolysis preventing agent and the other ingredients may be dry-blended when being fed into the extruder, or the hydrolysis preventing agent may be fed through a supply port disposed in the midst of the extruder.

The inventive resin composition can be molded into various products by any of known molding methods such as an injection molding method, a blow molding method and an extrusion molding method.

An ordinary injection molding method, a gas injection molding method and an injection press molding method may be employed as the injection molding method. A cylinder temperature for the injection molding should be not lower than the melting point (Tm) or not lower than the fluidization starting temperature of the polylactic acid, preferably 150 to 230˚C, more preferably 180 to 210˚C. If the molding temperature is too low, short molding will occur to result in unstable molding, and overload is liable to occur. On the other hand, if the molding temperature is too high, the polylactic acid will be decomposed and, therefore, the resulting molded product is liable to have a reduced strength or be colored. The temperature of a mold should be not higher than the Tg of the resin composition, preferably not higher than (Tg-10˚C).

Exemplary blow molding methods include a direct blowing method in which a product is molded directly from material chips, an injection blow molding method in which a preform (bottomed parison) prepared by injection molding is blow-molded, and a draw blow molding method. For the injection blow molding, a hot parison method in which a preform is blow-molded immediately after preparation of the preform, or a cold parison method in which a preform is once cooled and taken out and then reheated to be blow-molded may be employed.

A T-die method or a round die method may be employed for the extrusion molding method. A temperature for the extrusion molding should be not lower than the melting point (Tm) or not lower than the fluidization starting temperature of the polylactic acid, preferably 150 to 230˚C, more preferably 180 to 210˚C. If the molding temperature is too low, unstable molding will result, and overload is liable to occur. On the other hand, if the molding temperature is too high, the polylactic acid component will be decomposed and, therefore, the resulting extrusion-molded product is liable to have a reduced strength or be colored. Sheets, pipes and the like are produced by the extrusion molding.

The form of a molded product produced by any of the aforesaid molding methods is not particularly limited. Specific examples of the molded product include: tableware such as dishes, bowls, pots, chopsticks, spoons, forks and knives; containers for fluids; container caps; stationery such as rulers, writing utensils, clear cases and CD cases; daily commodities such as sink corner strainers, trash boxes, washbowls, tooth brushes, combs and hangers; agricultural and horticultural materials such as flower pots and seeding pots; toys such as plastic models; electrical appliance resin components such as air conditioner panels and housings; and automotive resin components such as bumpers, interior panels and door trims. Other exemplary molded products which take advantage of the transparency include sunglasses and dummy lenses for glasses. The shapes of the fluid containers are not particularly limited, but the containers preferably each have a depth of not smaller than 20mm for containing the fluids. The wall thicknesses of the containers are not particularly limited, but are preferably not smaller than 0.1mm, more preferably 0.1 to 5mm, for strength. Specific examples of the fluid containers include: drinking cups and beverage bottles for milk beverages, cold beverages and alcoholic beverages; temporary storage containers for seasonings such as soy sauce, sauce, mayonnaise, ketchup and cooking oil; containers for shampoo and rinse; cosmetic containers; and containers for agricultural chemicals.

Specific applications of sheets and pipes produced by the extrusion molding method include material sheets for deep drawing, material sheets for batch foaming, cards such as credit cards, desk pads, clear files, straws, and agricultural and horticultural rigid pipes. Further, the sheets may be deep-drawn by vacuum forming, air pressure forming or vacuum air pressure forming for production of food containers, agricultural and horticultural containers, blister packages and press-through packages. The deep-drawing temperature and the heat treatment temperature are preferably (Tg+20˚C) to (Tg+100˚C). If the deep-drawing temperature is lower than (Tg+20˚C), the deep drawing is difficult. On the other hand, if the deep-drawing temperature is higher than (Tg+100˚C), the polylactic acid will be decomposed, resulting in uneven wall thickness and disorientation. This reduces the impact resistance.

The shapes of the food containers, the agricultural and horticultural containers, the blister packages, the press-through packages and the like are not particularly limited, but these containers are preferably deep-drawn containers each having a depth of not smaller than 2mm for containing food, goods and drugs. Further, the wall thicknesses of the containers are not particularly limited, but preferably not smaller than 50μm, more preferably 150 to 500μm, for strength. Examples of the food containers include fresh food trays, instant food containers, fast food containers and lunch boxes. Examples of the agricultural and horticultural containers include seeding pots. Examples of the blister packages include food containers, and packages for various commodities including stationery, toys and dry batteries.

Filaments and fibers can also be produced from the inventive resin composition. Multi-filaments and mono-filaments obtained from the resin composition can be spun into various types of filaments. The production method is not particularly limited, but a melt-spinning/drawing method is preferably employed for the production. The melt-spinning temperature is preferably 160˚C to 260˚C. If the melt-spinning temperature is lower than 160˚C, melt-extrusion tends to be difficult. If the melt-spinning temperature is higher than 260˚C, the polylactic acid is liable to suffer from remarkable decomposition, making it difficult to provide highly strong filaments. The filaments produced by the melt-spinning may be drawn to an intended filament diameter at a temperature not lower than Tg. Since the inventive resin composition is amorphous, it is difficult to significantly improve the properties of the resin composition comparably to a crystal resin by the drawing. However, the drawing causes slight orientation of molecular chains of the resin, thereby improving the strength and other properties of the filaments. The draw ratio is preferably about 1 to about 20.

The filaments produced by the aforesaid method are used for fibers and filaments for garments and industrial materials. Exemplary applications of the multi-filaments include various garment fibers, filaments and fibers for industrial applications such as ropes and nets, and filaments and fibers for flags and sign nets for advertising applications. Where the filaments are highly transparent, unique and characteristic effects are provided in the advertising applications. Exemplary applications of the mono-filaments include nets, gut, fish-lines and abrasive applications. The filaments are also applicable to composite materials composed of the filaments and a resin.

The inventive resin composition has a low birefringence index, more specifically a birefringence index of not higher than 0.005. Therefore, the inventive resin composition is applicable to optical - applications such as DVD substrates and CD substrates. The birefringence index is measured by a method to be described later.

## Examples

The present invention will hereinafter be described more specifically by way of examples. However, the present invention is not limited to the following examples.

In the following examples and comparative examples, various properties were measured in the following manner.

(1) Molecular weight

The molecular weight was determined at 40˚C with the use of tetrahydrofuran as an eluent by means of a gel permeation chromatography (GPC) device (available from Shimadzu Co., Ltd.) having a differential refractometer, and expressed on the basis of polystyrene calibration standards. A polylactic acid sample was prepared by dissolving polylactic acid in a small amount of chloroform and adding tetrahydrofuran to the resulting polylactic acid solution.

(2) Glass transition temperature (Tg) and melting point (Tm)

With the use of a DSC machine (Pyrisl DSC available from Perkin Elmer Corporation), a sample was heated at a temperature increasing rate of +20˚C/min from 25˚C to 200˚C. Then, the sample was kept at 200˚C for 10 minutes, and cooled at a temperature decreasing rate of -20˚C/min from 200˚C to 0˚C. Thereafter, the sample was kept at 0˚C for 5 minutes, and heated at a temperature increasing rate of +20˚C/min from 0˚C to 200˚C (second scanning). The glass transition temperature and the melting point were measured during the second scanning.

Where a single Tg was observed in a temperature range between the glass transition temperatures Tg of two ingredient resins in a resin blend, and the melting point Tm of a resin derived from polylactic acid was not observed in this temperature range in the DSC measurement, the resins were regarded as being sufficiently compatibilized with each other.

(3) Melt viscosity (hereinafter referred to simply as "MFR") (g/10 min)

In conformity with JIS K7210, the melt viscosity was measured under conditions F specified in Table 1 of Appendix A (at a temperature of 190˚C with a load of 2.16kg).

(4) Refractive index

A plate sample having a size of 10mm×20mm×2mm was cut out of an injection-molded product having a size of 85mm×50mm×2mm. With the use of Abbe refractometer (Atago's new type refractometer No.-16863 available from Atago Optical Device Co., Ltd), the refractive index of the plate sample was measured along an X-axis extending along a resin flow direction in the sample, along a Y-axis perpendicular to the X-axis in a surface of the plate sample, and along a Z-axis perpendicular to an XY-plane. Since the sample had a small birefringence, the refractive index measured along the X-axis was employed as the refractive index of the sample in each example. On the basis of the refractive index, the refractive index RIa of the impact resistance improving material and the refractive index RIb of the resin containing polymethyl methacrylate and polylactic acid were determined.

(5) Total light transmittance

In conformity with JIS K7105 (Light Transmittance Measuring Method A), the light transmittance of a 2-mm thick test sample was measured by means of a differential colorimeter (available from Nippon denshoku Industries Co., Ltd.) A sample having a total light transmittance of not lower than 85% can be advantageously used for various applications requiring transparency.

(6) DTUL (Distortion Temperature Under Load)

In conformity with JIS K7207, DTUL was measured with a load of 1.81MPa.

(7) Impact strength

In conformity with ASTM-256, a test piece having a size of 65mm×12mm×3mm was prepared, and the Izod impact strength was measured by notching the test piece.

(8) Moldability

Thickness unevenness due to sink occurring during molding was measured. As a result, a molded sample having a thickness unevenness of less than 0.01mm was regarded as having an excellent moldability (◎), and a molded sample having a thickness unevenness of not less than 0.01mm and less than 0.05mm was regarded as having a good moldability (○). A molded sample having a thickness unevenness of not less than 0.05mm and less than 0.10mm was regarded as having a poorer moldability (Δ), and a molded sample having a thickness unevenness of not less than 0.10mm was regarded as having an unacceptable moldability (×).

In the measurement of the thickness unevenness, the thickness of the molded sample (mold size: 125mm (length)×12mm(width)×3mm(thickness)) was measured at three points thereof (on a gate side, at the middle and on a distal side) arranged longitudinally thereof by a Mitutoyo's micrometer, and a difference between the maximum value and the minimum value was defined as the thickness unevenness.

(9) Durability

A test sample having a size of 125mm×12mm×3mm was stored under constant temperature and constant humidity conditions at 60°C at 95%RH for 500 hours. Before and after the storage, the flexural strength was measured with a load applied at a deformation rate of 1mm/mini.n conformity with JIS K7203. The ratio of the flexural strength after the 500-hour storage to the initial flexural strength was determined. As a result, a test sample having a flexural strength ratio of not less than 90% was regarded as having an excellent durability (◎), and a test sample having a flexural strength ratio of not less than 80% and less than 90% was regarded as having a good durability (○). A test sample having a flexural strength ratio of not less than 50% and less than 80% was regarded as having a poorer durability (Δ), and a test sample having a flexural strength ratio of less than 50% was regarded as having an unacceptable durability (×).

The following ingredients were used in the following examples and comparative examples.

1. Polylactic acid

(1) PLA-A: NatureWorks (trade name) available from Cargill Dow Corporation and having a weight average molecular weight of 190,000, an L-lactic acid content of 99 mol%, a D-lactic acid content of 1 mol%, a melting point of 168°C and an MFR of 3 g/10 min.
(2) PLA-B: NatureWorks (trade name) available from Cargill Dow Corporation and having a weight average molecular weight of 80,000, an L-lactic acid content of 99 mol%, a D-lactic acid content of 1 mol%, a melting point of 168°C and an MFR of 20 g/10 min.
(3) PLA-C: NatureWorks (trade name) available from Cargill Dow Corporation and having a weight average molecular weight of 110,000, an L-lactic acid content of 92 mol%, a D-lactic acid content of 8 mol%, a softening point of 120°C and an MFR of 8 g/10 min.

2. PMMA

(1) PMMA-A: ACRYPET available from Mitsubishi Rayon Co., Ltd. and having a weight average molecular weight of 100,000 and a Tg of 115°C.
(2) PMMA-B: Prepared in the following manner.
After 1 part by mass of polyvinyl alcohol (having a saponification degree of 88% and a polymerization degree of 1000) was dissolved in 800 parts by mass of pure water in a reactor including a cooling tube, a temperature gage, a stirrer and a nitrogen inlet pipe, a monomer solution containing 400 parts by mass of methyl methacrylate, 2 parts by mass of n-dodecylmercaptan and 2 parts by mass of azobisisobutyronitrile were put in the reactor, and the resulting mixture was heated up to 80°C in 1 hour with stirring at 400 rpm in a nitrogen atmosphere. Then, the resulting mixture was allowed to stand for 2 hours. Thereafter, the mixture was further heated up to 90°C, and allowed to stand for 2 hours. Then, the mixture was further heated up to 120°C to distil away residual monomers together with water. Thus, slurry was obtained, and the suspension polymerization was ended. The resulting slurry was filtered, washed and dried in a hot air dryer at 50°C. Thus, PMMA-B was prepared, which had an average primary particle diameter of 93μm, a weight average molecular weight of 40,000 and a Tg of 104°C.
(3) PMMA-C: Prepared in substantially the same manner as in the preparation of the PMMA-B, except that 0.5 parts by mass of n-dodecylmercaptan was used. The PMMA-C had a weight average molecular weight of 250,000 and a Tg of 115°C.

3. Impact resistance improving material

(1) MB-1: METABLEN W-450A (trade name) available from Mitsubishi Rayon Co., Ltd.
(2) SF-1: STAPHYLOID IM-601 (trade name) available from Ganz Chemical Co., Ltd.
(3) SF-2: STAPHYLOID AC-3355 (trade name) available from Ganz Chemical Co., Ltd.
(4) SF-3: STAPHYLOID AC-4030 (trade name) available from Ganz Chemical Co., Ltd.
(5) MP-1: MODIPER A3100 (trade name) available from Nippon Oil & Fats Co., Ltd.
(6) MP-2: MODIPER A5200 (trade name) available from Nippon Oil & Fats Co., Ltd.

The structures, refractive indexes and the like of these impact resistance improving materials are shown in Table 1.

Table 1

| PROPERTIES OF IMPACT RESISTANCE IMPROVING MATERIALS | | | | | | |
|---|---|---|---|---|---|---|
| Designation | Trade name | Structure | | | Refractive index | Maker |
| | | Type | Core | Shell | | |
| MB-1 | METHABLEN W450A | Core-Shell | Acryl rubber | PMMA | 1.470 | Mitsubishi Rayon |
| SF-1 | STAPHYLOID IM-601 | Core-Shell | AN-PS copolymer | PMMA | 1.570 | Ganz Chemical |
| SF-2 | STAPHYLOID AC-3355 | Core-Shell | Polybutyl acrylate | PMMA | 1.470 | Ganz Chemical |
| SF-3 | STAPHYLOID AC-4030 | Core-Shell | Polybutyl acrylate | PMMA | 1.470 | Ganz Chemical |
| MP-1 | MODIPER A3100 | PS-PP graft copolymer | | | 1.550 | Nippon Oil & Fats |
| MP-2 | MODIPER A5200 | PMMA-EGMA graft copolymer | | | 1.510 | Nippon Oil & Fats |
| PMMA: Polymethyl methacrylate<br>EGMA: Ethylene-glycidyl methacrylate<br>AN: acrylonitrile<br>PS: Polystyrene<br>PP: Polypropylene | | | | | | |

4. Others

(1) Mc-1: An organically treated swellable phyllosilicate (available under the trade name of "S-BEN W" from Hojun Co., Ltd. and having an organic cation of dimethyldioctadecylammonium)
(2) Mc-2: An organically treated swellable phyllosilicate (available under the trade name of "MEE" from Coop Chemical Co. , Ltd. and having an organic cation of dihydroxyethylmethyldodecylammonium)
(3) MF-1: A carbodiimide compound (a polylactic acid terminal blocking agent available under the trade name of "EN-160" from Matsumoto Yushi Co, Ltd.)

Example 1

After 60 parts by mass of PLA-A, 40 parts by mass of PMMA-A and 10 parts by mass of MP-1 were dry-blended, the resulting mixture was fed into a twin screw extruder (PCM-30 available from Ikegai Co., Ltd., including a dice having a diameter of 4mm and 3 holes, and having a cylinder temperature of 210˚C and a die outlet temperature of 200˚C) through a hopper, and extruded, followed by pelletizing and drying. Thus, a resin composition was prepared. The resin composition pellets thus prepared were melted and injection-molded by means of a Toshiba Machinery's injection molding machine IS-80G under the following conditions: a cylinder temperature of 200˚C, an injection pressure of 60%,

**EP 1 785 453 B1**

a mold temperature of 25˚C, an injection period of 10 seconds and a cooling period of 20 seconds. The resulting injection-molded product was evaluated in various manners. On the other hand, a resin composition containing 60 parts by mass of PLA-A and 40 parts by mass of PMMA-A was extruded and molded in the aforesaid manner, and the refractive index of the resulting molded product was measured to be 1.469.

Examples 2 to 20 and Comparative Examples 1 to 3

Resin compositions were prepared in substantially the same manner as in Example 1, except that different types of polylactic acids, PMMAs and impact resistance improving materials were used in different amounts as shown in Table 2. Then, the resin compositions were evaluated. In Examples 18 to 20, Mc-1, Mc-2 or MF-1 was fed together with the other ingredients.

The results of Examples 1 to 20 and Comparative Examples 1 to 3 are collectively shown in Table 2.

EP 1 785 453 B1

Table 2 (To be continued)

| | Example | | | | | | | |
|---|---|---|---|---|---|---|---|---|
| | 1 * | 2 * | 3 * | 4 | 5 | 6 | 7 | 8 |
| **Formulation** | | | | | | | | |
| Resin | | | | | | | | |
|   Type | PLA-A | PLA-A | PLA-A | PLA-A | PLA-A | PLA-A | PLA-A | PLA-A |
|   Parts by mass | 60 | 60 | 60 | 60 | 60 | 60 | 60 | 60 |
| Resin | | | | | | | | |
|   Type | PMMA-A | PMMA-A | PMMA-A | PMMA-A | PMMA-A | PMMA-A | PMMA-A | PMMA-A |
|   Parts by mass | 40 | 40 | 40 | 40 | 40 | 40 | 40 | 40 |
| Impact resistance improving material | | | | | | | | |
|   Type | MP-1 | SF-1 | MP-2 | SF-2 | SF-3 | MB-1 | MB-1 | MB-1 |
|   Parts by mass | 10 | 10 | 10 | 10 | 10 | 10 | 1 | 5 |
| Others | | | | | | | | |
|   Type | - | - | - | - | - | - | - | - |
|   Parts by mass | - | - | - | - | - | - | - | - |
| **Refractive index** | | | | | | | | |
|   RIa | 1.550 | 1.570 | 1.510 | 1.470 | 1.470 | 1.472 | 1.472 | 1.472 |
|   RIb | 1.469 | 1.469 | 1.469 | 1.469 | 1.469 | 1.469 | 1.469 | 1.469 |
| **Properties** | | | | | | | | |
|   Tg (°C) | 67 | 67 | 67 | 67 | 68 | 68 | 66 | 66 |
|   Total light transmittance (%) | 68 | 50 | 75 | 93 | 92 | 90 | 92 | 91 |
|   Izod impact strength (J/m) | 36 | 38 | 42 | 70 | 51 | 47 | 28 | 35 |
|   DTUL (°C) | 62 | 62 | 62 | 62 | 62 | 64 | 62 | 62 |
|   Moldability | O | O | O | O | O | O | O | O |
|   Durability | O | O | O | O | O | O | O | O |

*examples 1-3 do not form part of the present invention

12

Table 2 (To be continued)

| | Example | | | | | | | |
|---|---|---|---|---|---|---|---|---|
| | 9 | 10 | 11 | 12 | 13 | 14 | 15 | 16 |
| **Formulation** | | | | | | | | |
| Resin | | | | | | | | |
|   Type | PLA-A | PLA-A | PLA-A | PLA-A | PLA-A | PLA-B | PLA-C | PLA-A |
|   Parts by mass | 60 | 60 | 70 | 50 | 30 | 60 | 60 | 60 |
| Resin | | | | | | | | |
|   Type | PMMA-A | PMMA-A | PMMA-A | PMMA-A | PMMA-A | PMMA-A | PMMA-A | PMMA-B |
|   Parts by mass | 40 | 40 | 30 | 50 | 70 | 40 | 40 | 40 |
| Impact resistance improving material | | | | | | | | |
|   Type | MB-1 | MB-1 | MB-1 | MB-1 | MB-1 | MB-1 | MB-1 | MB-1 |
|   Parts by mass | 30 | 100 | 10 | 10 | 10 | 10 | 10 | 10 |
| Others | | | | | | | | |
|   Type | – | – | – | – | – | – | – | – |
|   Parts by mass | – | – | – | – | – | – | – | – |
| Refractive index | | | | | | | | |
|   RIa | 1.472 | 1.472 | 1.472 | 1.472 | 1.472 | 1.472 | 1.472 | 1.472 |
|   RIb | 1.469 | 1.469 | 1.466 | 1.473 | 1.481 | 1.469 | 1.469 | 1.469 |
| Properties | | | | | | | | |
|   Tg (°C) | 68 | 67 | 62 | 75 | 89 | 66 | 67 | 67 |
|   Total light transmittance (%) | 89 | 88 | 87 | 93 | 85 | 89 | 90 | 91 |
|   Izod impact strength (J/m) | 65 | 74 | 45 | 43 | 46 | 42 | 42 | 42 |
|   DTUL (°C) | 64 | 63 | 60 | 72 | 83 | 62 | 62 | 62 |
|   Moldability | ○ | ○ | ○ | ○ | ○ | ◎ | ○ | ◎ |
|   Durability | ○ | ○ | ○ | ○ | ○ | ○ | ○ | ○ |

Examples [11, 13, 14] and 16 do not form part of the present invention

Table 2

| | Example | | | | Comparative Example | | |
|---|---|---|---|---|---|---|---|
| | 17 | 18 | 19 | 20 | 1 | 2 | 3 |
| Formulation | | | | | | | |
| Resin | | | | | | | |
|   Type | PLA-A | PLA-A | PLA-A | PLA-A | PLA-A | PLA-A | PLA-A |
|   Parts by mass | 60 | 60 | 60 | 60 | 100 | 60 | 90 |
| Resin | | | | | | | |
|   Type | PMMA-C | PMMA-A | PMMA-A | PMMA-A | – | PMMA-A | PMMA-A |
|   Parts by mass | 40 | 40 | 40 | 40 | – | 40 | 10 |
| Impact resistance improving material | | | | | | | |
|   Type | MB-1 | MB-1 | MB-1 | MB-1 | – | – | MB-1 |
|   Parts by mass | 10 | 10 | 10 | 10 | – | – | 5 |
| Others | | | | | | | |
|   Type | – | Mc-1 | Mc-2 | MF-1 | – | – | – |
|   Parts by mass | – | 2 | 2 | 2 | – | – | – |
| Refractive index | | | | | | | |
|   RIa | 1.472 | 1.472 | 1.472 | 1.472 | – | – | 1.472 |
|   RIb | 1.469 | 1.469 | 1.469 | 1.469 | 1.454 | 1.469 | 1.458 |
| Properties | | | | | | | |
|   Tg (°C) | 65 | 69 | 69 | 67 | 55 | 65 | 57 |
|   Total light transmittance (%) | 91 | 90 | 90 | 92 | 92 | 92 | 90 |
|   Izod impact strength (J/m) | 42 | 40 | 39 | 46 | 24 | 24 | 34 |
|   DTUL (°C) | 62 | 67 | 68 | 62 | 53 | 62 | 55 |
|   Moldability | ○ | ◎ | ◎ | ○ | △ | ○ | △ |
|   Durability | ○ | ○ | ○ | ◎ | × | ○ | △ |

As apparent from Table 2, the polylactic acid-containing resin compositions of Examples 4 to 8 each had a higher Tg, a higher DTUL and an improved heat resistance as compared with the polylactic acid (Comparative Example 1), and were satisfactory in transparency, impact resistance, moldability and durability.

In Examples 4 to 6, the impact resistance improving materials each containing an acrylic monomer unit were used, so that the impact strength was significantly improved as compared with Examples 1 and 2. In Examples 4 to 6, the impact resistance improving materials of the core-shell type were used, so that the impact strength was significantly improved.

In Examples 4 to 10, 12 and 14 to 20, the impact resistance improving materials each had a refractive index (RIa) in a range of RIb±0.005 (wherein RIb is the refractive index of the polylactic acid/PMMA resin), so that the transparency is more excellent.

The results of Examples 6 to 10 show that, as the amount of the impact resistance improving material is increased, the impact resistance is improved and the transparency is maintained at a high level.

The results of Example 12 shows that, even if the ratio of the polylactic acid and the PMMA is changed, it is possible to ensure sufficient impact resistance and transparency.

The results of Examples 15 and 17 show that, even if the molecular weights of the polylactic acid and the PMMA are changed, the heat resistance, the impact resistance and the transparency are not significantly changed.

In examples 18 and 19, mica was used, so that the heat resistance and the moldability were further improved and the impact resistance and the transparency were satisfactory.

In Example 20, the terminal blocking agent was used, so that the durability was further improved and the impact resistance and the transparency were satisfactory.

In Comparative Example 2, on the other hand, no impact resistance improving material was added, so that the impact resistance was insufficient but the transparency and the heat resistance were satisfactory.

In Comparative Example 3, the amount of the PMMA was less than the lower limit of the range specified by the present invention, so that the heat resistance improving effect was poor and the moldability and the durability were unacceptable.

**Claims**

**1.** A polylactic acid-containing resin composition comprising :

> 100 parts by mass of a resin containing 20 to 98 mass % of polymethyl methacrylate having a molecular weight of 50,000 to 250,000 and 80 to 2 mass % of polylactic acid having a molecular weight of 100,000 to 500,000; and
> 1 to 100 parts by mass of a material improving impact resistance;

wherein the material improving impact resistance is a polymeric material comprising an acrylic monomer unit, and the material improving the impact resistance has a refractive index of 1.402 to 1.542, and the refractive index of the material improving impact resistance satisfies the following expression (i) :

$$RIb - 0.005 < RIa < RIb + 0.005 \ ... \ (i)$$

wherein RIa is the refractive index of the material improving the impact resistance and RIb is a refractive index of the resin containing the polymethyl methacrylate and the polylactic acid.

**2.** A polylactic acid-containing resin composition as set forth in claim 1, wherein the material improving impact resistance is a multilayer polymeric material of a core-shell type.

**3.** A polylactic acid-containing resin composition as set forth in claim 2, wherein the multilayer polymeric material includes a shell layer comprising a polymer having a methyl methacrylate unit, and a core layer comprising a polymer having an alkyl acrylate unit.

**4.** A polylactic acid-containing resin composition as set forth in any one of claims 1 to 3 further comprising 0.05 to 30 parts by mass of a swellable phyllosilicate based on 100 parts by mass of the resin composition.

**5.** A polylactic acid-containing resin composition as set forth in any one of claims 1 to 4, wherein the polylactic acid has a blocked terminal.

6. A product molded from a polylactic acid-containing resin composition as recited in any one of claims 1 to 5.

**Patentansprüche**

1. Polymilchsäurehaltige Harzzusammensetzung, umfassend:

100 Masseanteile eines Harzes, das 20 bis 98 Masse-% Polymethylmethacrylat mit einem Molekulargewicht von 50.000 bis 250.000 und 80 bis 2 Masse-% Polymilchsäure mit einem Molekulargewicht von 100.000 bis 500.000 enthält; und
1 bis 100 Masseanteile eines Materials, das Schlagbiegefestigkeit verbessert;

wobei das Material, das Schlagbiegefestigkeit verbessert, ein Polymermaterial ist, das eine Acrylmonomereinheit umfasst, und
das Material, das Schlagbiegefestigkeit verbessert, einen Brechungsindex von 1,402 bis 1,542 aufweist und der Brechungsindex des Materials, das Schlagbiegefestigkeit verbessert, folgenden Ausdruck (1) erfüllt:

$$\text{RIb} - 0,005 < \text{RIa} < \text{RIb} + 0,005 ... \text{(i)}$$

wobei RIa der Brechungsindex des Materials, das Schlagbiegefestigkeit verbessert, ist und RIb ein Brechungsindex des Harzes, das das Polymethylmethacrylat und die Polymilchsäure enthält, ist.

2. Polymilchsäurehaltige Harzzusammensetzung nach Anspruch 1, wobei das Material, das Schlagbiegefestigkeit verbessert, ein mehrschichtiges Polymermaterial einer Kern-Schale-Art ist.

3. Polymilchsäurehaltige Harzzusammensetzung nach Anspruch 2, wobei das mehrschichtige Polymermaterial eine Schalenschicht, die ein Polymer mit einer Methylmethacrylateinheit umfasst, und eine Kernschicht enthält, die ein Polymer mit einer Alkylacrylateinheit umfasst.

4. Polymilchsäurehaltige Harzzusammensetzung nach einem der Ansprüche 1 bis 3, ferner umfassend 0,05 bis 30 Masseanteile eines quellfähigen Phyllosilikats basierend auf 100 Masseanteilen der Harzzusammensetzung.

5. Polymilchsäurehaltige Harzzusammensetzung nach einem der Ansprüche 1 bis 4, wobei die Polymilchsäure blokkiert endständig ist.

6. Aus einer polymilchsäurehaltigen Harzzusammensetzung nach einem der Ansprüche 1 bis 5 geformtes Erzeugnis.

**Revendications**

1. Composition de résine contenant l'acide polylactique comprenant :

100 parties en masse d'une résine contenant 20 à 98 % en masse de polyméthacrylate de méthyle ayant un poids moléculaire compris entre 50 000 et 250 000 et 80 à 2 % en masse d'acide polylactique ayant un poids moléculaire compris entre 100 000 et 500 000 ; et
1 à 100 parties en masse d'un matériau améliorant la résistance au choc ;

où le matériau améliorant la résistance au choc est un matériau polymère comprenant une unité de monomère acrylique, et
le matériau améliorant la résistance au choc a un indice de réfraction compris entre 1,402 et 1,542, et l'indice de réfraction du matériau améliorant la résistance au choc satisfait à l'expression (i) suivante :

$$\text{RIb} - 0,005 < \text{RIa} < \text{RIb} + 0,005 ... \text{(i)}$$

où RIa est l'indice de réfraction du matériau améliorant la résistance au choc et RIb est un indice de réfraction de la résine contenant le polyméthacrylate de méthyle et l'acide polylactique.

2. Composition de résine contenant l'acide polylactique telle que présentée dans la revendication 1, dans laquelle le matériau améliorant la résistance au choc est un matériau polymère multicouche de type coeur-enveloppe.

3. Composition de résine contenant l'acide polylactique telle que présentée dans la revendication 2, dans laquelle le matériau polymère multicouche comporte une couche enveloppe comprenant un polymère ayant une unité de méthacrylate de méthyle, et une couche coeur comprenant un polymère ayant une unité d'acrylate d'alkyle.

4. Composition de résine contenant l'acide polylactique telle que présentée dans l'une quelconque des revendications 1 à 3, comprenant en outre de 0,05 à 30 parties en masse d'un phyllosilicate gonflable sur la base de 100 parties en masse de la composition de résine.

5. Composition de résine contenant l'acide polylactique telle que présentée dans l'une quelconque des revendications 1 à 4, dans laquelle l'acide polylactique possède une partie terminale bloquée.

6. Produit moulé à partir d'une composition de résine contenant l'acide polylactique selon l'une quelconque des revendications 1 à 5.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003064246 A
- JP 2003238788 A
- JP 2003286396 A
- JP 2003417167 A

**Non-patent literature cited in the description**

- *Polymer,* 1998, vol. 39 (26), 6891
- *Macromol. Chem. Phys,* 2000, vol. 201, 1295
- *J. Polym. Sci. Part B,* 2003, vol. 41 (1), 23